# EUROPEAN PATENT APPLICATION

(11) **EP 4 245 491 A1**
(43) Date of publication of application: **20.09.2023**
(21) Application number: 22161907.5
(22) Date of filing: 14.03.2022
(51) Int. Cl.: B27N 3/00, B27N 3/04, B27N 3/18, B27N 5/00, B29C 53/04, B29C 53/84, B29C 70/12, B29C 70/54, B31F 1/00, B31F 5/04, B32B 37/06, B32B 37/10, B32B 37/16, B44C 1/24, B44C 3/00, B44C 3/02, B44C 3/08, D21F 11/00, B42D 25/305, B42D 25/346, B42D 25/36

(54) **METHOD FOR MANUFACTURING A COMPOSITE ARTICLE**

(71) Applicant: PaperShell AB, 543 50 Tibro (SE)
(72) Inventor: BERGSTRÖM, Anders, 542 30 Mariestad (SE); BREITHOLTZ, Anders, 426 71 Västra Frölunda (SE)
(74) Representative: AWA Sweden AB

(57) **Abstract**

The present invention relates to a method for manufacturing a composite article. The method comprises the steps of providing at least one sheet comprising a composite material, wherein the composite material comprises cellulosic fibers and a composite agent selected from the group of: thermoset resins, reactive thermoplastic resins, cellulose, hemicellulose, nanocellulose, lignin, bio-based polymers, substituted and non substituted furan, polyfurfuryl alcohol, and combinations thereof, applying a liquid to at least one of the at least two sheets, wherein the liquid forms a liquid pattern on the at least one sheet, arranging the at least two sheets on top of each other to form a stack of sheets, and pressing the stack of sheets in a pressing tool to form the composite article, wherein parts of the at least one sheet being applied with liquid becomes lighter than parts not being applied with liquid, such that the liquid pattern forms an integrated image shaped as the liquid pattern in the formed composite article.

## Description

### Technical field

The present invention relates to a method for manufacturing a composite article.

### Background

In view of the growing awareness of the negative environmental impacts of global warming and pollution of sea and soil, it is a necessity to replace pure fossil-based plastics, mineral filled plastics and fiber reinforced plastics (FRP), such as glass fiber reinforced plastics (GFRP) and carbon reinforced plastics (CFRP), with more environmentally friendly alternatives. FRP composites such as GFRP and or CFRP composites, exhibit a high or very high strength-to-weight ratio, and is extremely rigid due to the pronounced length and strength of the manmade non-degradable fibers. These FRP composites are often used in various applications where e.g. flexural strength, impact resistance and/or weather resistance is of importance, like in vehicles, in protective sport appliances, buildings, electric housing and the like. However, the environmental impact of these materials is high in both manufacturing of raw materials like glass or carbon fiber, production of an intermediate of the same, and disposal and/or recycling. Attempts have been made to replace fossil-based polymers in GFRP and CFRP materials with more environmentally friendly alternatives, e.g. bio based or bio attributed polymers. Further, attempts have been made to replace the glass or carbon fiber with natural fibers such as flax, hemp, sisal etc. However, the major challenge for both bio based and/or bio attributed, and renewable and/or natural fiber alternatives for GFRP and CFRP composites is the lack of sufficient volumes and consistency of quality in supply that can compete with the fossil based polymers and manmade fibers.

Further, often there is a need to mark, label or include information in conjunction with the manufactured article. Current methods use additional processing steps and additional material, which is less efficient, more energy consuming and less environmentally friendly.

Therefore, there exists a need for improved methods for manufacturing environmentally friendly and complex-shaped articles that may include labelling, information or marks.

### Summary

An object of the present invention is to provide a method for manufacturing a composite article which at least partly alleviates the above-mentioned drawbacks. This, and other objects, that will become apparent in the following are accomplished by a method for manufacturing a composite article comprising the steps of:
- providing at least one sheet comprising a composite material, wherein the composite material comprises cellulosic fibers and a composite agent selected from the group of: thermoset resins, reactive thermoplastic resins, cellulose, hemicellulose, nanocellulose, lignin, bio-based polymers, substituted and non substituted furan, polyfurfuryl alcohol, and combinations thereof;
- producing a pattern on at least one of the at least two sheets by i) applying a liquid to at least one of the at least two sheets, wherein the liquid forms a liquid pattern on the at least one sheet, and/or ii) cutting the at least one sheet to form one or more holes in the at least one sheet and one or more cut out pieces, wherein the cut out pieces are placed on top of or below the one or more sheet to form a pattern;
- arranging the at least two sheets on top of each other to form a stack of sheets; and
- pressing the stack of sheets in a pressing tool to form the composite article, wherein i) parts of the at least one sheet being applied with liquid becomes lighter than parts not being applied with liquid, such that the liquid pattern forms an integrated image shaped as the liquid pattern in the formed composite article, and/or ii) parts of the at least one sheet having holes and cut out pieces form an integrated image shaped as the pattern formed by the holes and placed cut out pieces.

The inventive method has proven highly promising for manufacturing a plurality of composite articles having simple or complex structures, and which may comprise integrated images, such as Quick Response (QR) codes, written instructions or pictures.

According to one aspect of the invention, there is a provided a composite article obtainable by the inventive method.

### Brief description of the drawings

The above objects, as well as additional objects, features, and advantages of the present invention, will be more fully appreciated by reference to the following illustrative and non-limiting detailed description of embodiments of the present invention, when taken in conjunction with the accompanying drawings, wherein:
Fig. 1a-e shows four different examples of composite articles comprising images or image patterns attained using the methods of the present disclosure.
Fig. 2a-d is a schematic illustration of composite articles comprising different images.
Fig. 3a-d depicts a cross-section of a sheet or a stack of sheets, which have been perforated to comprise one or more recesses.
Fig. 4a-b depict, in cross-section, a schematic illustration of a sheet comprising one or more recesses according to embodiments of the invention.
Fig. 5a-c depict, in cross-section, schematic illustrations of sheets having recesses of different shapes according to embodiments of the present invention.
Fig. 6a-c depict a top view of schematic illustrations of sheet or stacks of sheets with one or more recess which have been perforated according to embodiments of the present invention.

The figures are not necessarily to scale, and generally only show parts that are necessary in order to elucidate the inventive concept, wherein other parts may be omitted or merely suggested.

### Detailed description

The present disclosure relates to new and enhanced methods for producing a composite article having integrated images by processing the composite sheet to produce a pattern by cutting the sheet and/or applying a liquid, such as water, before pressing said article into a desired shape.

There is an aim to replace fossil-based polymers in GFRP and CFRP materials with more environmentally friendly alternatives, e.g. bio based or bio attributed polymers, and to replace the glass or carbon fiber with natural fibers.

Natural fiber composites (NFC) are divided into non-wood fiber based composites and, wood fibers and wood particles based composites. Wood fibers are often shorter in length than other natural fibers like jute or flax. Due to the greater length of the non-wood fibers (natural fibers) e.g. the potential in flexural strength driven applications is greater than with the wood fibers and/or wood particles. Also, non-wood fibers have often high (>50%) cellulose content, which delivers a high tensile strength, and degree of cellulose crystallinity, whereas natural fibers have some disadvantages because the high cellulose content implies a large amount hydroxyl groups (OH) in the fiber that can attract water molecules, thus causing swelling of the fiber and initiating natural retting process. This results in voids at the interface of the composite, which will affect the mechanical properties and loss in dimensional stability.

A large and stable renewable resource of wood fibers is cellulosic fibers of different wood species, such as conifer or eucalyptus, coming from forest industries, such as pulp and paper production. Recently, a number of NFC materials have been produced combining cellulosic fibers from wood and polymers to decrease the environmental impacts and yet create loadbearing articles. Such materials are usually manufactured by mixing and compounding into granulates with compounders extruder, obtaining granulates for injection molding.

A well-known solution of creating single curved, or developable, composite articles based on cellulosic fibers is wood veneer that comprises layers, wherein the long wood fibers in each layer are often placed perpendicularly to the wood fibers in the adjacent layers, and wherein the layers are heat-pressed in a single curved shape, such as a seat for a chair. For more complex composite articles, such as composite articles comprising double curved or non-developable, surfaces, special and expensive 3D veneer or plastics is currently the only option, since the veneer will tear and break at attempts to create a double-curved surface.

Accordingly, the present disclosure provides improved methods for manufacturing environmentally friendly and complex-shaped composite articles having integrated images by cutting or applying a liquid and using a pressing tool to shape the composite article.
The methods include the steps of providing at least one sheet comprising a composite material, wherein the composite material comprises cellulosic fibers and a composite agent selected from the group of: thermoset resins, reactive thermoplastic resins, cellulose, hemicellulose, nanocellulose, lignin, bio-based polymers, substituted and non substituted furan, polyfurfuryl alcohol, and combinations thereof, producing a pattern on at least one of the at least two sheets by either i) applying a liquid to at least one of the at least two sheets, arranging the at least two sheets on top of each other to form a stack of sheets, and pressing the stack of sheets in a pressing tool to form the composite article, wherein parts of the at least one sheet being applied with liquid becomes lighter than parts not being applied with liquid, such that the liquid pattern forms an integrated image shaped as the liquid pattern in the formed composite article, or by ii) cutting the at least one sheet to form one or more holes in the at least one sheet and one or more cut out pieces, wherein the cut out pieces are placed on top of or below the one or more sheet to form a pattern, arranging the at least two sheets on top of each other to form a stack of sheets, pressing the stack of sheets in a pressing tool to form the composite article, wherein parts of the at least one sheet having holes and cut out pieces form an integrated image shaped as the pattern formed by the holes and placed cut out pieces. The image arise from pressure differences in the material caused either by the liquid being applied to the sheet, or by material being cut out of the sheet, and placed above the sheet. In some embodiments, the water and the cutting are combined, to create deeper contrasts in the cut out/stacked sheets. Even though pieces are cut out or are arranged/placed on top of each other before pressing, no height differences or edges may be felt in the resulting article due to the flowing of the material during pressing. By using also the cut out parts of the sheets, material can be recycled, and the waste will be very low. The cutting may be made with any suitable tool, such as a laser.

The methods of the present disclosure attains a composite article with advantageous properties compares to corresponding articles in the prior art, but also enables the inclusion of integrated images in the composite article.

In the art, labelling with codes, such as QR codes or barcodes, or inclusion of information in the form of pictures, number series or a text strings, requires additional and separate processing steps, including additional material, which is less efficient and less environmentally friendly compared to the method of the invention. For example, an image displaying a QR-code or a picture may be printed on a sticker which is applied to the composite article. Besides from the extra process of making and applying said sticker, the sticker may be worn away, or damaged.

In contrast, the present invention provides methods in which integrated images may be created in a composite article. In one embodiment a liquid is applied to a surface of a composite material sheet, which liquid containing surface, when heat and pressure is applied to form the composite article from the sheet, becomes lighter than the surrounding non-liquid exposed/containing parts due to the pressure differences. Thus, the contrast between this lighter part where the liquid was applied, and the rest of the article, will form an integrated image within the article, which cannot be felt or touched, but only seen as a color shift in the material.

The composite article may be formed from a plurality of sheets which are arranged on top of each other to form a stack of sheets. At least one of the plurality of sheets is either cut and arranged with the cut out pieces to form a pattern or applied with a liquid to form a liquid pattern, which, when pressing the stack of sheets, will form an integrated image in the resulting composite article. The sheet to which the cutting has been done or liquid has been applied may be on the top/surface of the stack when being pressed, such that it will face the outside, upside or front of the article. In this embodiment, the pattern will have a relatively sharp contrast. In an alternative embodiment, the sheet may be further down in the stack, and the resulting image may be a bit more suggestive. The sheet may for example be covered by one or more sheets.

In one embodiment, the sheet may simply be cut to form holes, or stripes, and the cut out pieces be arranged on top of, or directly below the sheet to form a pattern, before it is arranged in a stack and pressed to generate a composite article with an integrated image of the corresponding pattern.

In one alternative or complementary embodiment, the sheet may simply be applied with a liquid to form a liquid pattern, which will give rise to a corresponding image in the composite material. In an alternative or complementary embodiment, the sheet is treated in a way such that it attains a negative pattern, i.e. a pattern which the liquid will not be applied to or not stick to even if applied, and hence that the liquid pattern is formed around said negative pattern. This negative pattern may be formed by treating the sheet, such as folding, wrinkling or pleating the sheet, where the folds/wrinkles will not retain water when the sheet is e.g. sprayed or submerged in the liquid, and hence a corresponding pattern will be formed in the composite article upon pressing. Another way of treating the sheet is to perforate the sheet to form recesses, such as holes or blind holes in the form of micro perforations, which do not retain the water as undamaged parts of the sheet do, nor give rise to the same pressure when pressing. Thus, the liquid pattern is formed around the recesses, and a corresponding pattern will be formed in the composite article upon pressing, where the location of the previous recesses will be darker than the surrounding parts. This negative pattern may also be achieved by the cut outs described above, which may be combined with applying a liquid to the sheet to get a further contrast.

Perforating the at least one sheet allows for attaining a distinct image of good resolution in the resulting composite article, such as a QR code or a detailed picture. Perforations may also be added to make the sheet more bendable such that it may more easily adapt to the shape of the pressing tool, and may also be used to indicate the reinforcements in the sheet and its orientation in the stack. Thus, composite articles having also complex shapes and displaying desired images may be more easily and effectively manufactured. Complex shapes may, e.g., refer to shapes comprising bends having a small radius, acute, right or obtuse angles, or sharp edges, while having a homogenous distribution of the ingoing materials.

Perforating the at least one sheet to form one or more recesses in the at least one sheet may be understood as a step of removing material from the at least one sheet. In some embodiments, the removed material is arranged in the pressing tool together with the at least one sheet prior to pressing. The removed material may thus be part of the produced composite article which advantageously decreases the amount of waste material of the method. This is corresponding to the cut out material which may also be seen as a type of perforation. Thus, an even more environmentally friendly and cost-effective manufacturing method is obtained. The inventors have surprisingly found that a composite article manufactured from at least one sheet and waste material exhibits substantially analogous material properties as a composite article manufactured using no waste material.

The inventors have surprisingly realised that the present method induces floating of the composite material, in particular floating of the cellulosic fibers of the composite material, thereby creating a composite article having an even distribution of the composite material. Expressed differently, the inventive method provides a homogenous distribution of the cellulosic fibers throughout the composite material. Cracks and tears which may appear during the manufacturing process are advantageously filled with the composite material as a result of the induced floating. This advantageously allows for the production of a composite article having substantially equal material properties throughout the article. This advantageously decreases the risk of local imperfections in the composite article and thus decreasing the risk of local portions having undesirable mechanical properties such as being prone to crack formation.

The inventors have surprisingly found that applying a liquid to a composite material before pressing according to the methods of the invention will attain an integrated image in the resulting composite article, which image thus is an intrinsic part of the article itself. It cannot be felt on the surface of the material, as it does nor protrude or form a recess in the resulting composite article. This is also a result of the induced floating attained by the present invention, the material used, and how the pressing is performed.

The inventive method allows for the recesses being filled with the composite material during the pressing process thus producing a composite article comprising substantially no traces of said perforations, besides the desired color shift.

The floating induced by the present inventive method further advantageously induces joining or merging of the at least one sheet to sheet itself or another sheet which advantageously allows for improved mechanical properties. Expressed differently, substantially no traces of the interface between the at least one sheet to itself or another sheet may be visible in the produced composite article. Thus, the risk of adhesive or cohesive failure, which may occur when adhering sheets to each other using e.g. glue, is decreased or avoided.

The composite agent contributes to internal mechanical cross-linking of the fibers to each other, such that the fibers are caught and locked in each other, thus improving and contributing to the tensile and/or flexural strength of the manufactured composite article

The present method further induces hardening or annealing of the composite material thus providing a composite article having improved material properties, e.g. stiffness and hardness, as compared to the provided at least one sheet.

The surface of the composite articles may be shiny, dull, or comprise a desired pattern. Further, the surface of the manufactured composite article has proven wear-resistant. Thus, costly and/or non-eco-friendly postprocessing steps such as lacquering or coating to improve wear-resistance may be avoided.

The inventive method, the material and processes, manufactures a composite article which is substantially dry. This advantageously leads to the composite article being relatively easy to remove from the pressing tool. This improves the quality of the produced composite article since the risk of the composite article being adhered to the pressing tool is decreased. A composite article being partially or completely adhered to the pressing tool after production could necessitate a costly and difficult removal procedure and/or to the composite article breaking when removed from the pressing tool. Further, the method decreases the need for cleaning the pressing tool between the runs since substantially the whole composite article may be removed from the pressing tool. Consequently, the inventive method allows for a faster repetitions, i.e. manufacturing a plurality of composite articles in sequence.

The term "composite article" as referred to herein in, should generally be understood as an article comprising at least to two substances with different physical and chemical properties and in which each substance retains its identity while contributing desirable properties to the whole.

The composite articles produced by the inventive method have high moisture resistance, which is highly beneficial when the composite articles are intended for outdoor use, or for use in a moist environment, such as a bathroom or in a humid climate. Further, the finishing of the surface of composite articles of the manufactured by the present invention is highly decorative and aesthetically appealing and may further be adjusted to the desired application. In particular, the surface of the composite articles may be shiny, dull, or comprise a desired pattern.

Thermoset resins may be substituted and non-substituted furan, epoxy, polyurethane, or phenolic resin. The reactive thermoplastic resins may have similar performance after curing as thermosets and may be in liquid or powder form. Such composite agents are readily available, cost-efficient, oftentimes biodegradable, and environmentally friendly. In particular, the composite agent is polyfurfuryl alcohol (PFA). Among bio-based polymers polylactic acid, the poly L-lactide, polyhydroxybuturate, polyhydroxyalkalonates (PHAs), polyamide, polypropylene (PP) and polyethylene terephthalate can be used.

The perforating the at least one sheet to form one or more recesses in the at least one sheet may be performed using, e.g., laser cutting or mechanical cutting, or by punching holes in the sheet.
In some embodiments, the at least one sheet comprising the liquid pattern is at the top, surface, upside, or outside of the stack of sheets, which when pressed will form the outside or front of the composite article. Thus, the sheet comprising the liquid pattern will be part of the outer layer of the composite article which face the end user when looking at the composite article.

The term "stack of sheets" as referred to herein, may generally be understood as a layered unit wherein the at least to sheets have been arranged on top of each other. The stack of sheets advantageously allows for tailoring the thickness of the manufactured composite article by i.e. providing stacks of different thicknesses or providing stacks comprising different amounts of sheets. A stack typically comprise 3 or more sheets, such as 10-45 sheets, or 15-30 sheets.

In some embodiments, the at least one sheet comprising the liquid pattern is not at the at the top, surface, upside, or outside of the stack of sheets, but is covered with at least one other sheet. The sheet may be arranged anywhere in the stack, from the top of the stack forming the outside surface/front of the composite article to the bottom of the stack of sheets, which when pressed will form the inside or back of the composite article. The further down in the stack, the more suggestive and less sharp the image will appear to the end user. Also the amount of pressure applied affects the intensity of the attained image, where an increased pressure give rise to a fainter image, as the contrast fades with pressure.

In some embodiments, the method comprises a further step of treating the at least one sheet to form a negative pattern before applying the liquid, such that the liquid pattern is formed around the negative pattern. As explained above, the negative pattern will not absorb or retain the liquid, and hence the liquid pattern may be formed around the negative pattern. The liquid pattern will give rise to a lighter shade in the resulting composite article, and hence the negative pattern will form a darker shade. The contrasts between said dark and light portions will then result in an integrated image in the composite article.

In some embodiments, treating the at least one sheet to form a negative pattern may comprise folding or wrinkling the at least one sheet to form one or more folds or wrinkles in the at least one sheet, wherein, upon applying liquid to the at least one sheet, the liquid pattern is formed around the one or more folds or wrinkles. In this way, also aesthetically pleasing patterns may be attained, in addition to the inclusion of labels, codes and different types of information.

In some embodiments, treating the at least one sheet to form a negative pattern may comprise perforating the at least one sheet to form one or more recesses in the at least one sheet, wherein, upon applying the liquid to the at least one sheet, the liquid pattern is formed around the one or more recesses.

The recesses may be formed in the at least one sheet or in several sheets in a stack, and may be located on the same or opposite side of a sheet.

In some embodiments, the one or more recesses may be a blind-hole or a through hole. The term "blind hole" as referred to herein, may generally be understood as a hole having a specific depth without breaking through to another side of the e.g. sheet. Expressed differently, a blind hole may provide e.g. a sheet with only one opening. The term "through hole" as referred to herein, may generally be understood as a hole running completely through e.g. a sheet. Expressed differently, a through hole may provide e.g. a sheet with two separate, connected openings.

In some embodiments, the one or more recesses may be V-shaped, U-shaped or rectangular. Each of the one or more recesses may have the same or different shape. It is understood that some of the one or more recesses may have the same shape while some others of the one or more recesses may have another shape. Each of the one or more recesses may extend substantially the same distance or different distances into the sheets.

At least one of the one or more recesses may have a depth in the range of X-100 %, such as Y-100 %, such as Z-100 % based on the thickness of the at least one sheet. As an alternative, at least one of the one or more recesses may have a depth in the range of X-90 %, such as Y-80% based on the thickness of the at least one sheet.

At least one of the one or more recesses may have a breadth in the range of x-100 %, such as y-100 %, such as z-100 % based on the breadth of the sheet. As an alternative, the at least one of the one or more recesses may have a breadth in the range of from x-95 %, such as y-90%, such as z-85 % based on the breadth of the sheet.

It is understood that in an example where the one or more recesses are e.g. tapered, have a V-shape or a U-shape, the depth and/or the breadth of the one or more recesses may vary depending on in what plane of the at least one sheet the depth and/or breadth is measured. In this example, a normal of the plane is parallel to a normal of the surface of the at least one sheet.

In some embodiments, each of the separate recesses are aligned in a direction perpendicular to the longitudinal extension of the sheet, i.e. the recesses are made in the direction of the thinnest part of the sheet.

In one example, the sheet is a substantially rectangular wherein the longitudinal extension of the sheet may be considered extending in a direction from one short-end to another.

Each of the separate recesses may have substantially the same shape, such as the substantially same diameter or breadth, or different shapes. Each of the separate recesses may have the same depth or different depths.

In some embodiments, the recesses are through holes that correspond to the cut outs described above and below. These width of these may be of small or large size, such as ranging from micro holes to several centimeters or decimeters in length.

In some embodiments, the liquid pattern, and thus resulting image, forms a Quick Response, QR, code, a barcode, a picture, a number series and/or a text string. Also more aesthetically pleasing patterns may be formed using the method of the invention.

In some embodiments, the liquid is applied to the at least one sheet to form a pattern by spraying, painting, printing and/or splashing the liquid onto the sheet, or by immersing the sheet in the liquid. Typically, when the sheet has been treated and a negative pattern is used, the sheet may be sprayed or immersed in the liquid, to cover the whole sheet. In some embodiments, the liquid used is water, such as clean tap water.

In some embodiments, pressing the at least one sheet in a pressing tool comprises pressing said at least one sheet in a pressing tool at a pressure of at least 20 kg/cm² and the temperature of at least 120°C during a time period of at least one minute. The pressing may be conducted at a pressure of at least 25 kg/cm², such as at least 30 kg/cm². The temperature may be at least 140 °C, such as at least 160 °C. The time period may be at least two minutes, such as at least three minutes. The specified pressure, temperature and time have been found to provide a composite article of a particularly desired quality.

It is understood that the composite material is subjected to the pressure of at least 25 kg/cm², such as at least 30 kg/cm².

The temperature of the inventive method may be controlled by heating the pressing tool. The pressing tool may be heated by e.g. flowing hot water in conduits provided in the pressing tool, electrically heating heat elements provided in the pressing tool, by conductively heating at least part of the pressing tool, or by placing the pressing tool in an oven. It is understood that the pressing tool conducts heat so as to provide an even heat distribution to the composite article. The pressing tool may comprise a metal, such as aluminum, e.g. aluminum alloys, or steel.

In some embodiments, the composite agent is selected from the list of cellulose, hemicellulose, nanocellulose, polyfurfuryl alcohol, and combinations thereof.

In some embodiments, the at least one sheet is a polyfurfuryl alcohol impregnated kraft paper. The specific at least one sheet provides a composite article having improved material properties, e.g. hydrophobicity and selfextinguishability as determined to ISO 3795. Kraft paper as such is known to the person skilled in the art.

The term "polyfurfuryl alcohol impregnated kraft paper" as referred to herein, may generally be understood as a kraft paper which has been impregnated or infused with a polyfurfuryl alcohol.

In some embodiments, the polyfurfuryl alcohol impregnated kraft paper comprises 60 to 90 wt% of cellulosic fibers having a maximum length of 10 mm, such as a maximum length of 4 mm, and 10 to 40 wt% of a composite agent selected from hemicellulose, nanocellulose, lignin, and polyfurfuryl alcohol, such as polyfurfuryl alcohol.

In some embodiments, the cellulosic fibers have a maximum length of 10 mm, such as maximum 4 mm.

The specified length further improves the floating induced by the inventive method. Without wishing to be bound by any particular theory, the advantageous floating properties may due to the relatively short fibers in combination with the composite agent having a certain viscosity, that can be improved by e.g. adding max. 20% ethanol in the process, and in combination with the specified manufacturing parameters, e.g., pressure, temperature, and pressure, thus causing the fibers to float during manufacturing of the composite article.

Cellulosic fibers are made with ethers or esters of cellulose, which can be obtained from the bark, wood or leaves of plants, or from other plantbased material. Cellulosic fibers may be derived from the conversion of wood into wood pulp. The length of each cellulosic fiber in the composite material may be same as or different from the length of the other cellulosic fibers. Indeed, it is conceivable that some of the cellulosic fibers may have a length being greater than 10 mm, but the amount of these fibers should be considered negligible. By the term "negligible" is understood as an amount below 0.01 wt%. Cellulosic fibers may be provided in any suitable form, such as sheets, pellets or the like. The cellulosic fibers may be randomly oriented or may be oriented such that the longitudinal extensions of the fibers are substantially parallel.

The cellulosic fibers that may be used in the composite material for manufacturing the composite article according to the present invention can be recycled cellulosic fibers, which offers the advantage of decreasing the cost of the composite article even further and contributing to circular economy. On the other hand, the cellulosic fibers may be virgin cellulosic fibers, which provides an increased tensile and/or flexural strength of the composite article compared to when recycled cellulosic fibers are used. Further, it is conceivable that the cellulosic fibers is a mixture of recycled and virgin cellulosic fibers. The cellulosic fibers may comprise softwood kraft paper pulp, hardwood kraft paper pulp, sulfite fibers, organosolv fibers or combinations thereof. Preferably, the cellulosic fibers comprise from 50 to 90 wt% of the kraft paper pulp.

In some embodiments, the sheet has a thickness of up to 2 mm, such as up to 1.5 mm, such as up to 1 mm. The specified thicknesses allows for an easily bendable and formable sheet which advantageously allows for the at least one sheet to adapt to the shape of the pressing tool. It is understood that the shape of the pressing tool correspond to the shape of the produced composite article. As an alternative, the at least one sheet may have a thickness of from 0.1 mm to 1 mm, such as from 0.2 mm to 1 mm, such as from 0.2 mm to 0.8 mm.

In some embodiments, the method comprises a step of cooling the composite article. The cooling may be active or passive.

In some embodiments, a composite article of enhanced mechanical properties, and with an embedded, integrated image, may be attained by applying the methods described above and below.

Aspects and embodiments of the present disclosure will be described more fully hereinafter with reference to the accompanying drawings.

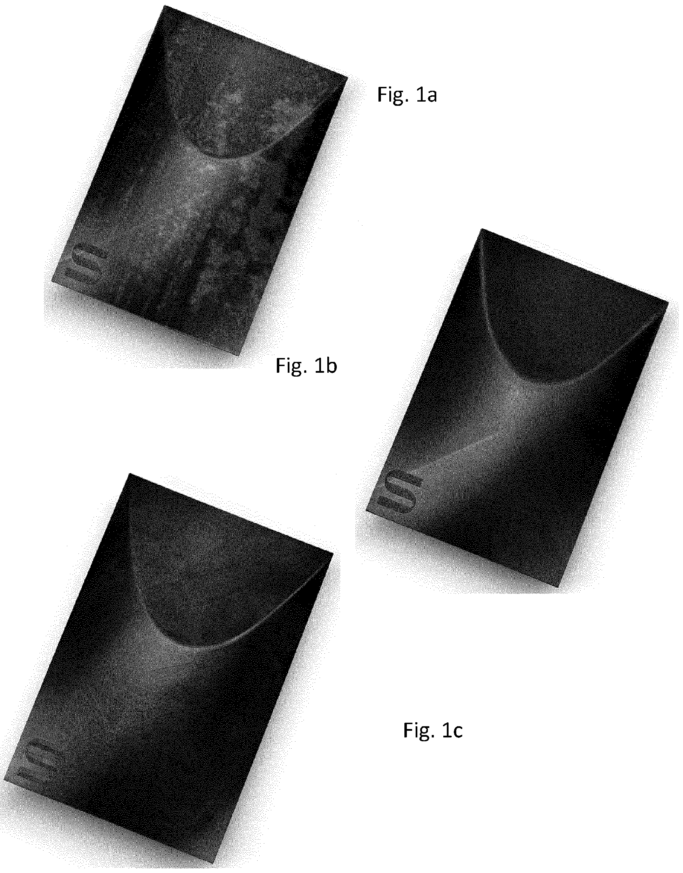

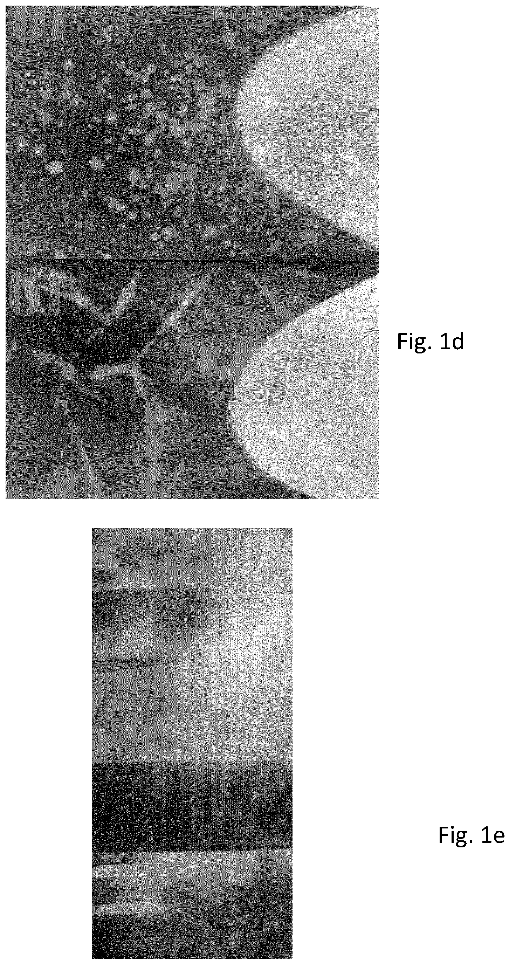

Fig. 1 shows five different examples of composite articles comprising images or image patterns attained using the methods of the present disclosure.

Fig. 1a shows a splatted patterns and a letter S.

Fig. 1b shows a lighter shade around the bending of the article due to perforations being present, and also the letter S.

Fig. 1c shows an embodiment where parts have been cut out of the sheet and placed above the sheet the pressing step, to form a "camouflage" pattern. This embodiment is especially environmentally friendly as it produced almost no waste, and have a very high OEE (overall equipment efficiency).

Fig. 1d shows two different patterns side by side, one platted pattern from splatting liquid onto the sheet, and one pattern attained from wrinkling/folding the sheet.

Fig 1e. shows a striped pattern of dark and light stripes, where the lighter ones arise from parts of the sheet being applied with liquid.

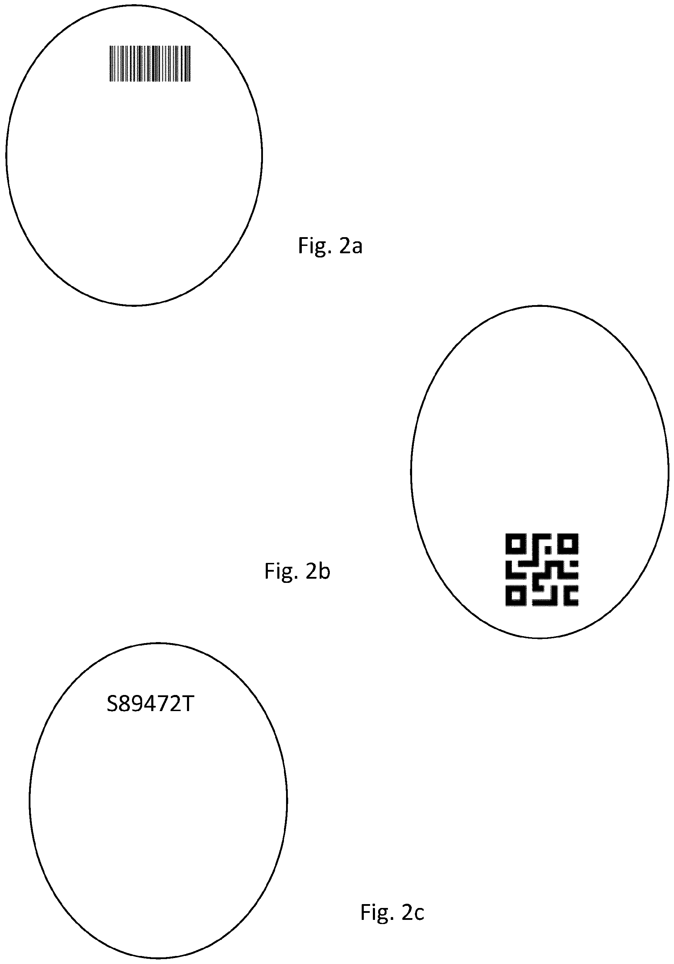

Fig. 2a-d is a schematic illustration of composite articles comprising different images.

Fig. 2a is a schematic illustration of a composite article comprising a barcode image.

Fig. 2b is a schematic illustration of composite article comprising a QR-code image.

Fig. 2c is a schematic illustration of composite article comprising a text string/numerical array image.

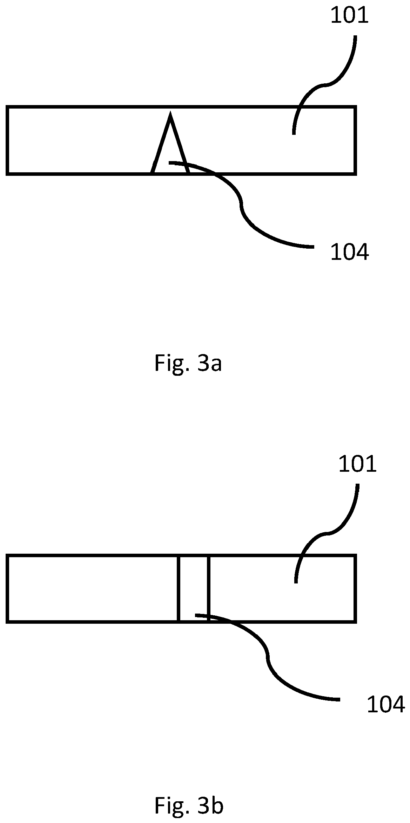

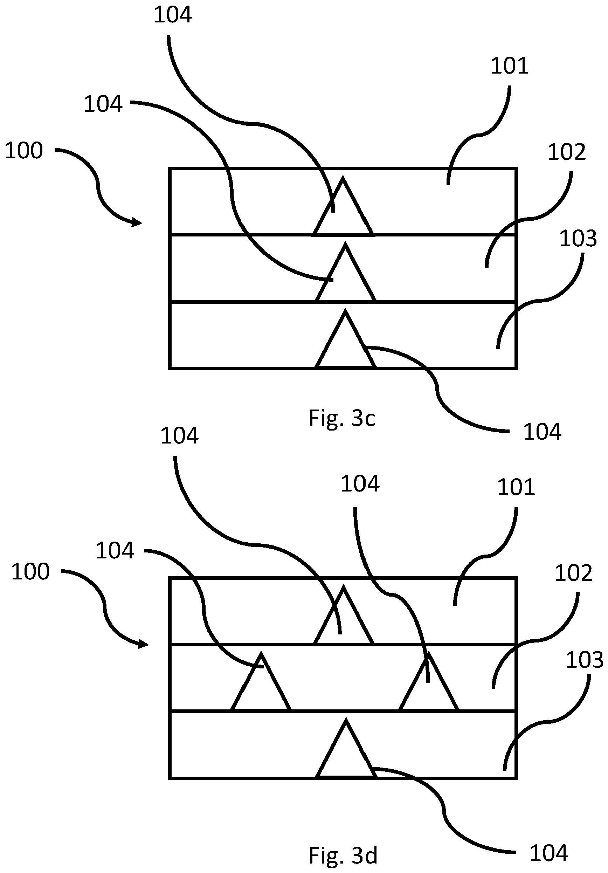

Fig. 3a-b depicts in cross-section a sheet 101 which have been perforated, wherein a recess 104 extends into the sheet.

In Fig. 3a the recess 104 extends into but not through the sheet 101. The recess 104 may thus be considered a blind hole.

Fig. 3b depicts in cross-section a sheet 101 which have been perforated, wherein a recess 104 extends into the sheet all the way through so as to form a through hole.

Fig. 3c-d depicts in cross-section a stack of sheets 100 which have been perforated. In the present example the stack of sheets comprises three sheets 101, 102, 103 wherein each sheet in the stack comprises a separate recess 104. As seen in fig. 3c, each of the separate recesses 104 may be aligned in a direction perpendicular to the orientation of the sheet.

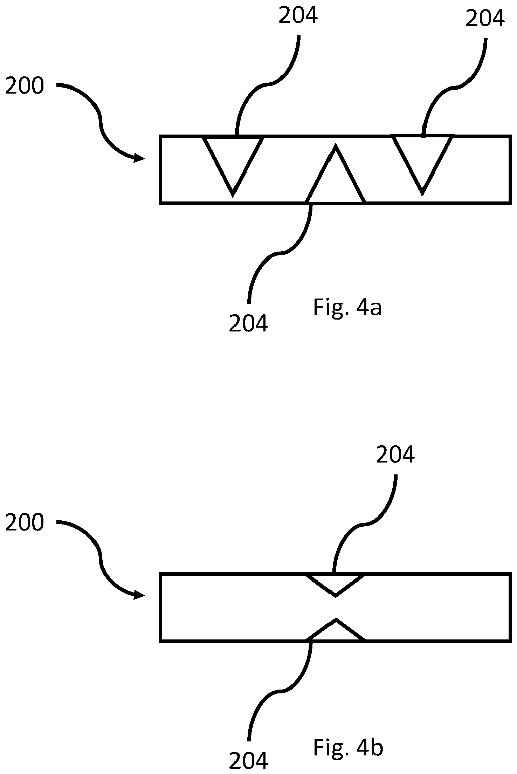

Fig. 4a depicts in cross-section a sheet 200 which may be one of at least one sheet and/or may be arranged as one sheet part of a stack of sheets. In the present example, three recesses 204 are located on opposite sides of the sheet 200.

Fig. 4b depicts in cross-section a sheet 200 which may be one of at least one sheet and/or may be arranged as one sheet part of a stack of sheets. In the present example, two recesses 204 are located on opposite sides of the sheet 200 and where the recesses 204 are aligned in a direction perpendicular to the longitudinal extension of the sheet 200.

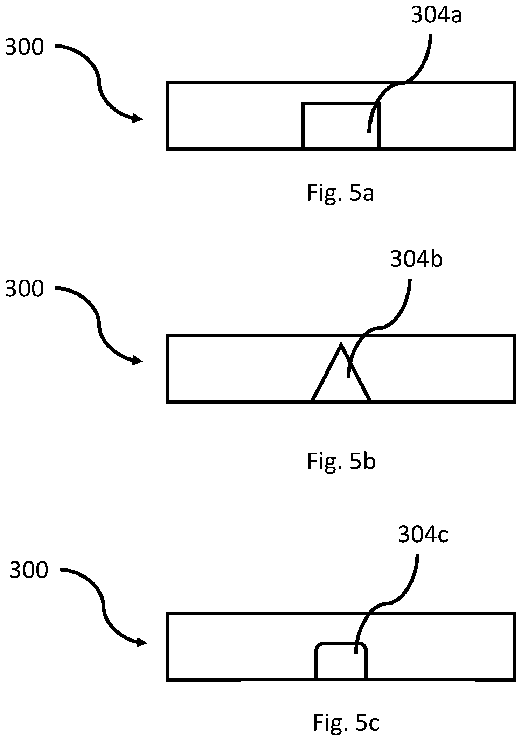

Fig. 5a-c depicts sheets which have been perforated such that a recess 304a, 304b, 304c has been formed. In figure 5a, the recess 304a is square-shaped. In fig. 5b, the recess 304b is V-shaped. In figure 5c, the recess 304c is U-shaped.

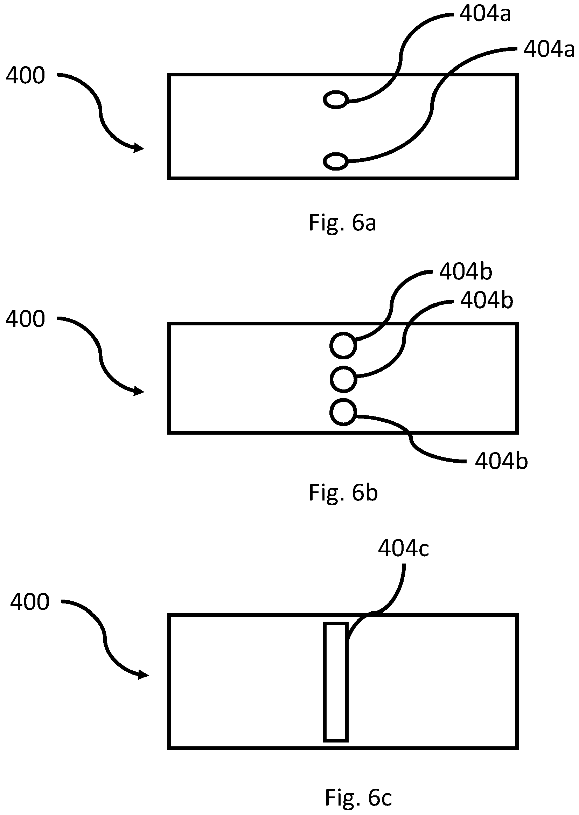

Fig. 6a-c schematically shows a top view of sheets 400a, 400b, 400c which have been perforated to form one or more recesses 404a, 404b, 404c in the sheet 400a, 400b, 400c according to embodiments of the invention.

As seen in fig. 6a, the one or more recesses 404a may for example be two recesses 404a, each having an oval cross-section.

As seen in fig. 6b, the one or more recesses 404b may for example be three recesses, each having a circular cross-section.

As seen in fig. 6c, the one or more recesses 404c may for example be one recess having a rectangular cross-section.

Referring to fig. 6a-c, one or more of the recesses may be a blind hole or a through hole.

Additionally, variations to the disclosed embodiments and examples can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

### Example

A composite article is manufactured according to the following. One rectangular sheet of a polyfurfuryl impregnated kraft paper is perforated using a laser cutter so as to provide recesses in the sheet forming a negative pattern. In the present example, the recesses are V-shaped and sequentially arranged from a first long side to an opposing second long side of the sheet. Water is applied to the sheet by spraying the sheep with water. The sheet is then placed on top of a stack of 15 sheets of polyfurfuryl impregnated kraft papers. The stack of sheets is placed in a pressing tool and pressed to a pressure of 20 kg/cm² and a temperature of 120°C during a time period of one minute so as to produce a composite article comprising an integrated image according to the negative pattern, where the negative pattern give rise to a darker shade than the surrounding part of the material of the composite article. The composite article is removed from the pressing tool.

## Claims

1. A method for manufacturing a composite article comprising of steps of:
- providing at least two sheets comprising a composite material, wherein the composite material comprises cellulosic fibers and a composite agent selected from the group of: thermoset resins, reactive thermoplastic resins, cellulose, hemicellulose, nanocellulose, lignin, bio-based polymers, substituted and non substituted furan, polyfurfuryl alcohol, and combinations thereof;
- producing a pattern on at least one of the at least two sheets by i) applying a liquid to at least one of the at least two sheets, wherein the liquid forms a liquid pattern on the at least one sheet, and/or ii) cutting the at least one sheet to form one or more holes in the at least one sheet and one or more cut out pieces, wherein the cut out pieces are arranged on top of or below the one or more sheet to form a pattern;
- arranging the at least two sheets on top of each other to form a stack of sheets; and
- pressing the stack of sheets in a pressing tool to form the composite article, wherein i) parts of the at least one sheet being applied with liquid becomes lighter than parts not being applied with liquid, such that the liquid pattern forms an integrated image shaped as the liquid pattern in the formed composite article, and/or ii) parts of the at least one sheet having holes and cut out pieces form an integrated image shaped as the pattern formed by the holes and arranged cut out pieces.

2. The method according to claim 1, wherein the at least one sheet comprising the liquid pattern is arranged at the top of the stack of sheets, which when pressed will form the outside or front of the composite article.

3. The method according to claim 1, wherein the at least one sheet comprising the liquid pattern is arranged at a position other than the top of the stack of sheets, such as close to or at the bottom of the stack of sheets, which when pressed will form the inside or back of the composite article.

4. The method according to claims 1-3, further comprising a step of:
- treating the at least one sheet to form a negative pattern before applying the liquid, such that the liquid pattern is formed around the negative pattern.

5. The method according to claim 4, wherein treating the at least one sheet before applying the liquid comprises:
- perforating the at least one sheet to form one or more recesses in the at least one sheet, and/or
- folding or wrinkling the at least one sheet to form one or more folds or wrinkles in the at least one sheet,
wherein, upon applying the liquid to the at least one sheet, the liquid pattern is formed around the one or more recesses, folds or wrinkles.

6. The method according to claim 5, wherein the one or more recesses is a blind-hole or a through hole, and wherein the one or more recesses is V-shaped, U-shaped or rectangular.

7. The method according to any one of the preceding claims, wherein the pattern or liquid pattern forms a Quick Response, QR, code, a barcode, a picture, a number series and/or a text string.

8. The method according to any one of the preceding claims, wherein the liquid is applied to the at least one sheet to form a pattern by spraying, painting, printing and/or splashing the liquid onto the sheet, or by immersing the sheet in the liquid.

9. The method according to any one of the preceding claims, wherein the liquid is water.

10. The method according to any one of the preceding claims, wherein pressing the at least one sheet in a pressing tool comprises pressing said at least one sheet in a pressing tool at a pressure of at least 20 kg/cm² and the temperature of at least 120°C during a time period of at least one minute.

11. The method according to any one of the preceding claims, wherein the composite agent is selected from the list of cellulose, hemicellulose, nanocellulose, polyfurfuryl alcohol, and combinations thereof.

12. The method according any one of the preceding claims, wherein the at least one sheet is a polyfurfuryl alcohol impregnated kraft paper.

13. The method according to any one of the preceding claims, wherein the cellulosic fibers have a maximum length of 10 mm.

14. The method according to any one of the preceding claims, wherein the sheet has a thickness of up to 2 mm.

15. A composite article obtainable by the method according to any one of claims 1-14.
